# EUROPÄISCHE PATENTSCHRIFT

(11) **EP 1 875 573 B1**
(45) Veröffentlichungstag und Bekanntmachung des Hinweises auf die Patenterteilung: **10.10.2012**
(21) Anmeldenummer: 06725754.3
(22) Anmeldetag: 13.04.2006
(51) Int. Cl.: H02G 3/04, H02G 15/18, H02G 11/00

(54) **VERFAHREN ZUM UMMANTELN VON LANGGESTRECKTEM GUT, WIE INSBESONDERE KABELSÄTZEN, MIT EINER UMHÜLLUNG**
METHOD FOR COVERING AN ELONGATED PRODUCT IN PARTICULAR CABLE LOOMS WITH A COATING
PROCEDE POUR ENTOURER UN PRODUIT OBLONG, COMME NOTAMMENT DES FAISCEAUX DE CABLES, D'UNE GAINE

(30) Priorität: 14.04.2005 DE 102005017381
(43) Veröffentlichungstag der Anmeldung: 09.01.2008
(73) Patentinhaber: TESA SE, 20253 Hamburg (DE)
(72) Erfinder: FRIEDRICH, Thomas, 25436 Uetersen (DE); WAHLERS-SCHMIDLIN, Andreas, 21640 Horneburg (DE); LANGE, Frank, 22763 Hamburg (DE)
(86) Internationale Anmeldenummer: PCT/EP2006/061594
(87) Internationale Veröffentlichungsnummer: WO 2006/108871

(56) Entgegenhaltungen:
- US-A- 4 327 246
- US-A1- 2005 031 821
- US-A1- 2005 069 666

## Beschreibung

Die Erfindung bezieht sich auf eine Vorrichtung und ein Verfahren zum Ummanteln von langgestrecktem Gut, wie insbesondere Kabelsätzen, mit einer Umhüllung, wobei die bandagierten Kabelbäume in Automobilen Verwendung finden können.

In vielen Industriebereichen werden Bündel aus einer Vielzahl von elektrischen Leitungen vor dem Einbau oder in bereits montiertem Zustand umwickelt, um den Raumbedarf des Leitungsbündels durch Bandagieren zu reduzieren sowie zusätzlich Schutzfunktionen zu erzielen. Mit Folienklebebändern wird ein gewisser Schutz vor Flüssigkeitszutritt erreicht, mit luftigen und voluminösen Klebebändern auf Basis von dicken Vliesstoffen oder Schaumstoffen als Träger erhält man dämpfende Eigenschaften, bei Verwendung von abriebfesten, stabilen Trägermaterialien wird eine Schutzfunktion gegen Scheuern und Reiben erzielt.

Besonders die Schutzfunktion gegenüber Scheuem, Reiben, Schleifen an scharfen Kanten und Graten, hier zusammengefasst unter dem Begriff der Abriebfestigkeit, nimmt an Bedeutung zu. Die durch Produktionsprozesse bedingten scharfen Kanten, Grate, Schweißstellen werden immer weniger durch aufwendige Nacharbeit entschärft, da dieses einen zusätzlichen Arbeitsgang und Mehrkosten bedeutet. Dies gilt insbesondere bei den Rohkarossen in der Automobilindustrie, aber auch in anderen Bereichen wie zum Beispiel bei Waschmaschinen, vibrierenden Maschinen wie Kompressoren und dergleichen. Kabelstränge, die in solchen Bereichen verlaufen und die durch Vibration, Relativbewegungen und ähnlichem an derartigen, scharfen Stellen scheuem, sind daher potenziell gefährdet, dass die Schutzhülle zerstört wird. Diese Schutzhülle kann die zusätzliche Wickelbandage sein, aber auch die Isolierung um das Kupferkabel selber. In diesem Falle wäre ein Kurzschluss mit vollständigem Funktionsausfall und Zerstörung von elektrischen/elektronischen Bauteilen bis hin zum Brandereignis die Folge mit den daraus resultierenden Risiken an Sach- und Personenschäden.

Um derartige Gefährdungspotenziale zu minimieren, werden an kritischen Stellen die Kabelstränge nicht nur mit normalen Wickelbändern bandagiert, sondern es wird zusätzliche Vorsorge getroffen. Entweder werden Spezialklebebänder verwendet oder aber es kommen besondere Schutzkomponenten zum Einsatz. Dies können beispielsweise Kabelkanäle aus verschleißfesten Polymeren wie Polyamid oder Rillrohre oder Geflechtschläuche aus Polyester oder Polyamid sein, alles Komponenten, die in Hinblick auf Kosten, gesonderte Logistik und die aufwendige Handhabung bei der Montage ungünstig sind. Bei der Montage von Rillrohren und Kabelkanälen muss beispielsweise erheblicher Aufwand für die Anbringung der länglichen Rohrsysteme und ihre sichere Fixierung auf dem Kabelbündel beziehungsweise an der Karosse betrieben werden, um ein Verrutschen zu verhindern. Auch sind gegebenenfalls gesonderte Maßnahmen notwendig für den Klapperschutz, da die Leitungen in den Rohrsystemen selten formschlüssig anliegen und deshalb mit den harten Materialien der Rohre bei Vibrationen Klappergeräusche erzeugen.

Auch Spezialklebebänder werden in Bereichen mit erhöhtem Abrieb- und Scheuerschutz eingesetzt. Klebebänder für die Wickelung von Kabelsätzen oder ähnlichen langgestreckten Systemen mit zusätzlichen Funktionalitäten sind als Stand der Technik bekannt und werden teilweise auch kommerziell genutzt:
Zur Schallisolierung dient das in DE 199 10 730 A1 beschriebene Klebeband aus einem Laminat, einer Schallisolationsschicht (Velours oder Schaumstoff) und einem Vlies, das unter Verwendung von Schmelzkleber, -pulver oder einem Transfer-Fix hergestellt wird. Auf die Verwendung des sehr teuren Veloursträgers aus dem Polymerwerkstoffen Polyester oder Polyamid wird auch in anderen Anmeldungen zurückgegriffen, die Klebebänder mit ausgeprägter Klapperschutzfunktion beschreiben (DE 299 00 294 U1, DE 299 16 616 U1 sowie DE 101 02 927 A1). In allen Fällen werden hochpreisige Klebebänder erhalten, die in Hinblick auf den Abriebschutz keine sehr hohen Anforderungen erfüllen.

WO 00/13894 A1 beschreibt eine Scheuerschutzvorrichtung als Kantenschutz für scharfkantige Bauteile wie Stahlblechkarosseriegrate, wobei der Scheuerschutz an derartigen Stellen umgreifend aufgeklebt wird. Der Scheuerschutz besteht aus einer textilen Trägerschicht (beispielsweise aus Velours oder einem Nadelvlies) und einer scheuerstellenseitig aufgebrachten Schutzfolie, bevorzugt aus thermoplastischem Polyurethanpolymer, sowie einer bauteilseitig aufgebrachten Klebschicht mit einer Trennpapierabdeckung. Textile Trägerschicht und Schutzfolie sind über eine dünne Verklebung miteinander verbunden, wobei der Klebstoff nur teilbereichsweise in Form eines wärmeaktivierbaren Klebevlieses, -pulvers oder -films aufgebracht wird. Dieser aufwändige Verbund wird mit Trennpapier abgedeckt, in geeigneten Zuschnitten eingesetzt und ist deshalb für die generelle Schutzumwicklung von Kabelbäumen ungeeignet. Mit der erfindungsgemäßen Schutzvorrichtung wird nicht der Kabelbaum aktiv geschützt, sondern bei Bedarf scharfkantige Teile der Umgebung lokal abgedeckt als eine Art passiver Kabelsatzschutz.

DE 100 42 732 A1 beschreibt ein Klebeband für die spiralförmige Umwicklung langgestreckter Güter wie beispielsweise Kabelsätze, wobei durch eine nicht vollflächige Streifenbeschichtung auf dem bevorzugt textilem Träger eine verringerte Haftung des Wickelbandes zu den Leitungen und damit eine verbesserte Beweglichkeit und Biegefähigkeit des gesamten Kabelsatzes erreicht wird. Derartige erfindungsgemäße Klebebänder bieten jedoch keinen besonderen Abriebschutz, sondern dienen allein der Flexibilisierung des Kabelsatzes.

Ein Klebeband mit einer Eigenschaftskombination aus Schallminderung und Schutz vor Reibbeanspruchungen wird in DE 101 13.425 A1 beschrieben. Auch bei der geforderten Flächenmasse des Vliesträgers mit vertikalen Polfalten von mehr als 200 g/m² werden nur Schutzwirkungen im mittleren Bereich für Dämpfung und insbesondere gegen Abrieb erhalten, wie es auch schon aus der EP 0 995 782 A1 sowie EP 0 995 783 A1 bekannt war. Ähnlich verhält es sich auch für DE 100 39 983 A1, wo in einer speziellen Ausführungsform ein textiler Verbund aus einem scheuerbeständigen Vlies und einem textilen Flächengebilde beschrieben wird, der ohne Verwendung eines Kaschierklebers oder ähnlichem nur durch Wasserstrahlverfestigung hergestellt wird. Während das textile Flächengebilde zusätzliche dämpfende oder armierende Eigenschaften in den Verbund einbringt, sind die Abriebfestigkeiten für das scheuerbeständige wasserstrahlverfestigten Grundvlies aus Stapelfasern bei einer Flächenmasse von maximal 200 g/m² eher als gering anzusehen.

Das Dokument US-A-4 327 246 wird in Bezug zu dem vorliegenden Patent als nächstliegender Stand der Technik angesehen. Dieses Dokument beschreibt eine Umfüllung zum Ummanteln von langgestrecktem Gut, wie insbesondere Kabelsätzen, aus zwei Klebebändern, wobei die Umhüllung ein erstes und ein zweites einseitig klebend ausgerüstetes Klebeband aufweist, die in Laufrichtung jeweils klebemassesseitig mit Versatz aufeinander laminiert sind. Das Dokument D1 sieht auch vor, daß dieses Klebeband parallel zu dem zu ummantelnden Gut ausgerichtet wird und dann um das Gut herum gewickelt wird. Als Alternative dazu ist in diesem Dokument auch beschrieben, daß das Klebeband in einer spiralförmigen oder schraubenförmigen Bewegung um das einzuschlagenden Gut geführt werden kann.

Neben dem in der genannten Schrift erwähnten Nähvlies gibt es weitere Träger, die in Klebebändern zur Kabelbaumbandagierung eingesetzt werden.
Die DE 44 42 092 C1 beschreibt solch ein Klebeband auf Nähvliesbasis, das auf der Trägerrückseite beschichtet ist. Der DE 44 42 093 C1 liegt die Verwendung eines Vlieses als Träger für ein Klebeband zugrunde, das durch die Bildung von Maschen aus den Fasern des Vlieses verstärktes Querfaservlies entsteht, also ein dem Fachmann unter dem Namen Malivlies bekanntes Vlies. Die DE 44 42 507 C1 offenbart ein Klebeband zur Kabelbandagierung, jedoch basiert es auf so genannten Kunit- beziehungsweise Multiknitvliesen.

Ebenfalls ein mehrschichtiger Trägerverbund wird in EP 1 063 747 A1 beschrieben, um daraus eine Schutzummantelung für langgestreckte Gegenstände mit guter Abriebfestigkeit und Geräuschdämmung zu bilden. Erfindungsgemäß sind für den Verbundträger mindestens zwei Vliesstoffe zu nehmen, die locker, meist nur teilbereichsweise, miteinander verbunden sind und sich gegeneinander bewegen können. Gewebe, Gewirke und ähnliche textile Träger werden explizit als ungeeignet ausgeschlossen. Unklar bleibt auch das Ausmaß der Abriebfestigkeit und der Geräuschdämmung von erfindungsgemäßen Mehrschichtsystemen, da keinerlei konkrete, gemessene Daten mitgeteilt werden.

Einen extrem komplizierten und kostenträchtigen vielschichtigen Verbund offenbaren EP 0 886 357 A1 und EP 0 886 358 A1. Hier werden ein PET-Spinnvlies, ein PET-Gewirke sowie gegebenenfalls eine Filz- oder Schaumstofflage mit jeweils einer Kaschierschicht verklebt. Dieser an sich schon aufwändige Verbund aus bis zu fünf Lagen wird zusätzlich noch partiell mit den beiden notwendigen Komponenten eines Klettsystems und ein oder mehreren durch Schutzpapier abgedeckten Selbstklebestreifen versehen. Unter wirtschaftlichen Gesichtspunkten sind derartige Systeme mit hoher Abriebschutzfunktion nur an wenigen, ausgewählten Stellen, aber nicht als allgemeine Wickelbänder für Kabelsätze oder andere längsgestreckte Gegenstände vertretbar.

Die DE 100 36 805 A1 beschreibt eine Ummantelung zum Ummanteln von langgestrecktem Gut, wie insbesondere Kabelsätzen, mit einer bevorzugt textilen Eindeckung, bei der auf zumindest einem im Vergleich zur Breite der Eindeckung schmalen Kantenbereich der Eindeckung ein selbstklebend ausgerüstetes Klebeband vorhanden ist, das so auf der Eindeckung verklebt ist, dass sich das Klebeband über eine der Längskanten der Eindeckung erstreckt.

Aufgabe der Erfindung ist es, gegenüber dem Stand der Technik eine merkliche Verbesserung zu erzielen und ein Verfahren zur Ummantelung bereitzustellen, welches die Möglichkeit zur Bandagierung von Einzelleitungen zu Kabelsätzen mit hohem Schutz gegen mechanische Schädigungen durch Scheuem und Reiben an scharfen Kanten, Graten, Schweißpunkten kombiniert.

Gelöst wird diese Aufgabe durch eine Vorrichtung und ein Verfahren, wie es in den Ansprüchen 1 und 11 niederlegt ist. Gegenstand der Unteransprüche sind dabei vorteilhafte Weiterbildungen der Vorrichtung bzw. des Verfahrens sowie ein nach dem erfindungsgemäßen Verfahren ummantelter Kabelbaum.

In einer vorteilhaften Ausführungsform der Erfindung erfolgt die Wicklung des zweiten Klebebands der Umhüllung derart, dass die offene Klebemasse des ersten Klebebands vollständig vom zweiten Klebeband abgedeckt ist.

In der erfindungsgemäßen Ausführungsform der Erfindung ist an der freien Kante des ersten Klebebands der Umhüllung ein drittes einseitig klebend ausgerüstetes Klebeband auf das erste Klebeband in Laufrichtung jeweils klebemasseseitig mit Versatz auflaminiert, wobei das dritte Klebeband vorzugsweise eine kleinere Breite aufweist als das erste.
Das dritte Klebeband dient als Applikationshilfe der Umhüllung auf dem Gut und erleichtert so das Handling. Daher ist es besonders vorteilhaft auf der gleichen Seite des ersten Klebebands angeordnet wie das zweite Klebeband.

In einer weiteren vorteilhaften Ausführungsform der Erfindung liegen die Umhüllung sowie die Umhüllung mit dem dritten Klebeband in festen Längen, zum Beispiel als Meterware, oder als Endlosware auf Rollen (archimedische Spirale) vor.

Vorzugsweise weist die Umhüllung eine Breite auf von 50 bis 400 mm, insbesondere von 50 bis 250 mm.

Weiter vorzugsweise weist das erste Klebeband eine Breite auf von 30 bis 140 mm, das zweite Klebeband eine Breite von 30 bis 140 mm und/oder das dritte Klebeband eine Breite von 15 bis 35 mm.
Als vorteilhaft hat sich erwiesen, wenn das erste Klebeband und das zweite Klebeband die gleiche Breite aufweisen.

Weiter vorzugsweise ist das erste Klebeband mit einem Versatz von 20 bis 50 % bezogen auf die Breite des Klebebands auf das zweite Klebeband laminiert.

In einer weiteren vorteilhaften Ausführungsform der Erfindung weisen das erste Klebeband und das zweite Klebeband die gleiche Breite auf, wobei das Verhältnis Breite der Klebebänder B zu Breite des Versatzes VS zwischen 2,2:1 und 1,2:1, vorzugsweise zwischen 2:1 und 1,4:1 liegt, wobei weiter vorzugsweise der Grad der Überlappung mit zunehmender Breite der Klebebänder zunimmt.

Weiter vorzugsweise ist das dritte Klebeband mit einem Versatz von 40 bis 60 %, insbesondere 50 % bezogen auf die Breite des Klebebands auf das erste Klebeband laminiert. In einer weiteren vorteilhaften Ausführungsform der Erfindung weist die Umhüllung im Wesentlichen rechtwinklig zur Laufrichtung ein oder mehrere Schwächungslinien aufweist.

Um die Handeinreißbarkeit weiter zu verbessern, erstrecken sich in einer bevorzugten Ausführungsform der Erfindung die Schwächungslinien über die gesamte Breite der Umhüllung, sprich des ersten Klebebands, des zweiten Klebebands und/oder des dritten Klebebands.

Um ein besonders einfaches Arbeiten für den Anwender zu ermöglichen, sind die Schwächungslinien rechtwinklig zur Laufrichtung der Umhüllung ausgerichtet und/oder in regelmäßigen Abständen angeordnet.

Besonders einfach lässt die Umhüllung durchtrennen, wenn die Schwächungslinien in Form von Perforationen ausgestaltet sind.
Es lassen sich auf diese Weise Kanten zwischen den einzelnen Abschnitten erzielen, die sehr fusselfrei sind, also ein unerwünschtes Ausfransen vermieden wird.

Besonders vorteilhaft lassen sich die Schwächungslinien diskontinuierlich mit Flachstanzen oder querlaufenden Perforationsrädern sowie kontinuierlich unter Verwendung von rotativen Systemen wie Stachelwalzen oder Stanzwalzen erzeugen, gegebenenfalls unter Verwendung einer Gegenwalze (Vulkollanwalze), die das Gegenrad beim Schneiden bilden.
Weitere Möglichkeiten stellen gesteuert intermittierend arbeitende Schneidtechnologien dar wie beispielsweise die Verwendung von Lasern, Ultraschall, Hochdruckwasserstrahlen etc. Wird wie beim Laser- oder Ultraschallschneiden ein Teil der Energie als Wärme in das Trägermaterial eingebracht, lassen sich im Schneidbereich die Fasern verschmelzen, so dass ein störendes Ausfasern weitestgehend vermieden wird und man randscharfe Schneidkanten erhält. Letztere Verfahren eignen sich auch, um spezielle Schneidkantengeometrien zu erzielen, beispielsweise konkav oder konvex ausgeformte Schneidkanten.

Die Höhe der Stachel beziehungsweise Messer auf den Stanzwalzen beträgt bevorzugt 150 % der Summe aus Dicke erstes Klebeband plus Dicke zweites oder drittes Klebeband.

Das Loch-Steg-Verhältnis bei der Perforierung, also wie viel Millimeter hält das Material zusammen ("Brücke"), wie viel Millimeter sind durchgetrennt, bestimmt, wie leicht insbesondere die Fasern des Trägermaterials einzureißen sind. Des Weiteren beeinflusst dies Verhältnis letztlich auch, wie fusselfrei die Abrisskante zu erhalten ist.
Vorzugsweise beträgt die Stegbreite ungefähr 0,5 bis 2 mm und die Schnittbreite zwischen den Stegen ungefähr 10 mm, das heißt, es wechseln sich 0,5 bis 2 mm breite Stege mit 10 mm Einschnitten ab. Das Loch-Steg-Verhältnis beträgt demgemäß vorzugsweise 0,5:10 bis 2:10.
Mit dieser Schwächung des Materials lässt sich eine ausreichend geringe Abreißkraft erzielen.
Insbesondere diese letztere Ausführungsform erlaubt sogar, dass die Umhüllung abgelängt werden kann, wenn in Laufrichtung an ihr gezogen wird.

Das Trägermaterial des ersten, des zweiten und/oder des dritten Klebebands bestehen vorzugsweise aus einer Schlingenware oder einem Velour, Gelege, Gewebe oder Gewirke, insbesondere einem PET-Filamentgewebe oder einem Polyamid-Gewebe.

Als Trägermaterial für die Klebebänder können des Weiteren alle bekannten textilen Träger wie Gewebe, Gewirke oder Vliese verwendet werden, wobei unter "Vlies° zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden.
Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.

Die durch die Partikelschicht hindurchgenadelten Haltefasern halten die Deckschicht und die Unterlagsschicht in einem Abstand voneinander und sie sind mit der Deckschicht und der Unterlagsschicht verbunden.
Abstandsgewebe oder -gewirke sind u. a. in zwei Artikeln beschrieben, und zwar
einem Artikel aus der Fachzeitschrift "kettenwirk-praxis 3/93", 1993, Seiten 59 bis 63 "Raschelgewirkte Abstandsgewirke"
und
einem Artikel aus der Fachzeitschrift "kettenwirk-praxis 1/94", 1994, Seiten 73 bis 76 "Raschelgewirkte Abstandsgewirke"
auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzliche Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermaschen verfestigt sind.

Derartige verfestigte Vliese werden beispielsweise auf Nähwirkmaschinen des Typs "Malivlies" der Firma Karl Mayer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.
Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.
Schließlich sind auch Nähvliese als Vorprodukt geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt. Sodann ist das Caliweb® hervorragend geeignet. Das Caliweb® besteht aus einem thermisch fixierten Abstandsvliesstoff Multiknit mit zwei außenliegenden Maschenschichten und einer innenliegenden Polschicht, die senkrecht zu den Maschenschichten angeordnet sind.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.
Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.
In einem zweiten Schritt erfolgt die Thermofixierung, wobei die Festigkeit des Vlieses durch das Auf- oder Anschmelzen der Schmelzfasem nochmals erhöht wird.
Die Verfestigung des Vliesträgers lässt sich auch ohne Bindemittel beispielsweise durch Heißprägen mit strukturierten Walzen erreichen, wobei über Druck, Temperatur, Verweilzeit und die Prägegeometrie Eigenschaften wie Festigkeit, Dicke, Dichte, Flexibilität u.ä. gesteuert werden können.

Für die erfindungsgemäße Nutzung von Vliesen ist besonders die adhäsive Verfestigung von mechanisch vorverfestigten oder nassgelegten Vliesen von Interesse, wobei diese über Zugabe von Bindemittel in fester, flüssiger, geschäumter oder pastöser Form erfolgen kann. Prinzipielle Darreichungsformen sind vielfältig möglich, zum Beispiel feste Bindemittel als Pulver zum Einrieseln, als Folie oder als Gitternetz oder in Form von Bindefasern. Flüssige Bindemittel sind gelöst in Wasser oder organischen Lösemittel oder als Dispersion applizierbar. Überwiegend werden zur adhäsiven Verfestigung Bindedispersionen gewählt: Duroplasten in Form von Phenol- oder Melaminharzdispersionen, Elastomere als Dispersionen natürlicher oder synthetischer Kautschuke oder meist Dispersionen von Thermoplasten wie Acrylate, Vinylacetate, Polyurethane, Styrol-Butadien-Systeme, PVC u.ä. sowie deren Copolymere. Im Normalfall handelt es dabei um anionische oder nicht-ionogen stabilisierte Dispersionen, in besonderen Fällen können aber auch kationische Dispersionen von Vorteil sein.

Als Ausgangsmaterialien für die Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden. Insbesondere verschleißfeste Polymere wie Polyester, Polyolefine, Polyamide oder Glas- oder Carbonfasern Verwendung.

Zur Ummantelung des langgestreckten Gutes eignen sich auch Träger aus Papier, aus einem Laminat, aus einer Folie (zum Beispiel PP, PE, PET, PA), aus Schaumstoff oder aus einer geschäumten Folie.

Geeignete textile Träger weisen vorzugsweise ein Flächengewicht von 100 bis 500 g/m² auf, wobei für eine gute Kombination aus Abriebfestigkeit und Dämpfung weiter bevorzugt auf Textilien mit einer Flächenmasse von 150 bis 300 g/m² zurückgegriffen wird.

Für die Herstellung der Klebebänder kann auf alle bekannten Klebemassensysteme zurückgegriffen werden. Neben Natur- oder Synthesekautschuk basierten Klebemassen sind auch Silikonklebemassen sowie insbesondere Polyacrylatklebemassen verwendbar. Wegen ihrer besonderen Eignung als Klebemasse für Wickelbänder von automobilen Kabelsätzen in Hinblick auf die Foggingfreiheit sowie die hervorragende Verträglichkeit mit PVC- sowie PVC-freien Aderisolierungen sind lösungsmittelfreie Acrylat-Hotmeltmassen zu bevorzugen, wie sie in DE 198 07 752 A1 sowie in DE 100 11 788 A1 näher beschrieben sind. Die Auftragsgewichte bei der Klebemassenbeschichtung sind den jeweiligen Trägem im Hinblick auf die Rauhigkeit sowie Saugfähigkeit der zu beschichtenden Oberfläche anzupassen und bewegen sich im Bereich zwischen 40 bis 100 g/m² für glatte, nicht-saugende Schichten oder aber bis 300 g/m² für offene, strukturierte Schichten, wobei 50 bis 150 g/m² als ausreichend anzusehen sind. Als Beschichtungstechnologie kommen bekannte Systeme zum Zuge, wobei sich für offene, saugfähige Textilien Verfahren anbieten, die ein druckloses Auflegen von hochviskosen Klebemassen zulassen, beispielsweise die Beschichtung von Hotmelt-Klebemassen über Düsenbeschichtung oder über Transferierung von einem anti-adhäsiven Trägertuch oder Releaseliner auf den Trägerverbund.

Eine Schwerentflammbarkeit der Klebebänder lässt sich erzielen, indem dem Träger und/oder der Klebemasse Flammschutzmittel zugesetzt werden. Diese können bromorganische Verbindungen sein, bei Bedarf mit Synergisten wie Antimontrioxid, wobei jedoch in Hinblick auf die Halogenfreiheit des Klebebandes roter Phosphor, phosphororganische, mineralische oder intumeszierende Verbindungen wie Ammoniumpolyphosphat allein oder in Verbindung mit Synergisten bevorzugt Verwendung finden.

Durch geeignete Auswahl der beiden Teilkomponenten Träger und Klebemasse lässt sich die Umhüllung in weiten Bereichen variieren. Über die Art der verwendeten Träger sind Abrieb- und Temperaturbeständigkeiten, Dämpfungseigenschaften sowie Farbe und Erscheinungsform der äußeren Decklage wählbar.

Weiterhin umfasst somit der Erfindungsgedanke auch ein langgestrecktes Gut, wie insbesondere einen Kabelbaum, ummantelt nach den erfindungsgemäßen Verfahren sowie ein Fahrzeug, enthaltend das ummantelte langgestreckte Gut.

Überraschenderweise zeigt sich, dass bei erfindungsgemäßer Ummantelung die Abriebfestigkeit des ummantelten Gutes deutlich höher ausfällt als bisher bekannt, wodurch eine erhebliche Steigerung der Schutzwirkung gegen reibende und scheuernde Einwirkungen erzielt werden kann, ohne gesonderte Schutzmaßnahmen ergreifen zu müssen.

Mit dem erfindungsgemäßen Verfahren ist es möglich, eine Kombination aus den Bandagiermöglichkeiten eines normalen Wickelbandes mit dem Abriebschutz von Sondersystemen wie TwistTubes®, Geflechtschläuche, Wellrohren und ähnlichem herzustellen.

Das erfindungsgemäß ummantelte Gut zeichnet sich nicht nur durch sehr hohe Abrieb- und Scheuerfestigkeiten aus, sondern weist auch ausgeprägte bis herausragende Geräuschdämpfungseigenschaften auf. Gerade bei Kabelbäumen in Maschinen oder Automobilen ist vielfach die Notwendigkeit von Abriebschutz unmittelbar mit Klapperschutzanforderungen kombiniert. Ein beweglicher Kabelstrang kann zum einen an scharfen Kanten und Graten scheuem, aber auch bei Vibrationen und Gegenschlagen Klappergeräusche erzeugen. Ist dann das Wickelungsverfahren in der Lage, das Auftreten von Schallereignissen aktiv zu unterdrücken oder zu reduzieren, kann auf zusätzliche kostenträchtige geräuschdämpfende Maßnahmen verzichtet werden.

Der erfindungsgemäß ummantelte Kabelbaum weist aufgrund der fehlenden Fixierung der Kabel durch irgendeinen Kleber eine sehr hohe Flexibilität auf. Damit ist seine Biegefähigkeit beim Einbau - gerade auch in engen Durchgängen oder scharfen Abbiegungen - deutlich erhöht.

Bei nichtzylindrischem zu umhüllendem Gut beziehungsweise bei unterschiedlichen Durchmessern des Gutes kommen die Vorteile besonders deutlich zum Tragen.
In den Karosserien steht immer weniger Verbauraum zur Verfügung. Die vorgeschlagene Lösung kann auf Kabelbündel, die in flacher elliptischer Form vorliegen, appliziert werden und fixiert den gebündelten Kabelsatz in dieser Form, was deutliche Vorteile im Kabelsatzeinbau beinhaltet.
Das dritte Klebeband als optionale Applikationshilfe bietet Handhabungsvorteile in der Verarbeitung langer Verklebungsstrecken.

Bei der Ummantelung von Kabelbäumen mit großem Durchmesser kann es in der Kabelsatzherstellung bei der Handhabung der besonders breiten Umhüllung zu reduzierter Effektivität kommen. Dies kann durch eine größere Überlappung des ersten und des zweiten Klebbandes gelöst werden, ohne die besonderen Vorteile der zweifachen Ummantelung und der damit verbundenen hohen Abriebfestigkeit zu verlieren. Ein Teil der doppelten Klebbandschicht wird in Form der überlappenden Kaschierung realisiert.

Schließlich ist gegenüber den bekannten Systemen die Verarbeitbarkeit deutlich erhöht, insbesondere wenn die Kabelbäume sehr viele Abzweigungen aufweisen, die weitgehend in gleichmäßigen Abständen vom Stammbaum abgehen, so dass eine Ummantelung des Stammbaums von Abzweig zu Abzweig erfolgen muss.
Gerade bei Anordnung der Schwächungslinien in gleichmäßigen Abständen lassen gleichlange Abschnitte des Ummantelungsgutes problemlos durch einfaches Ziehen am abgewickelten Gut erzielen. Das Ziehen kann dabei sogar in axialer Richtung erfolgen, so dass die Ummantelung durch reine Zugspannung aufgetrennt wird.
Der Anwender kann ohne hohen Kraftaufwand die in der Länge vorgegebenen Stücke von der Rolle der Ummantelung entnehmen.

Im Folgenden soll die Erfindung anhand mehrerer Figuren näher erläutert werden, ohne damit die Erfindung unnötig einschränken zu wollen.

Es zeigen
- Figuren 1a und 1b: jeweils eine bekannte Umhüllung aus zwei aufeinander laminierten Klebebändern, wobei der Versatzgrad unterschiedlich ist,
- Figuren 2a und 2b: jeweils die erfindungsgemäße Umhüllung aus zwei aufeinander laminierten Klebebändern, wobei der Versatzgrad unterschiedlich ist, sowie einem dritten einseitig klebend ausgerüsteten Klebeband,
- Figur 3: den ersten Schritt des erfindungsgemäßen Verfahrens zur Ummanteln eines Kabelbaums,
- Figur 4: den zweiten Schritt des erfindungsgemäßen Verfahrens zur Ummanteln eines Kabelbaums und
- Figur 5: den vollständig nach dem erfindungsgemäßen Verfahren ummantelten Kabelbaum.

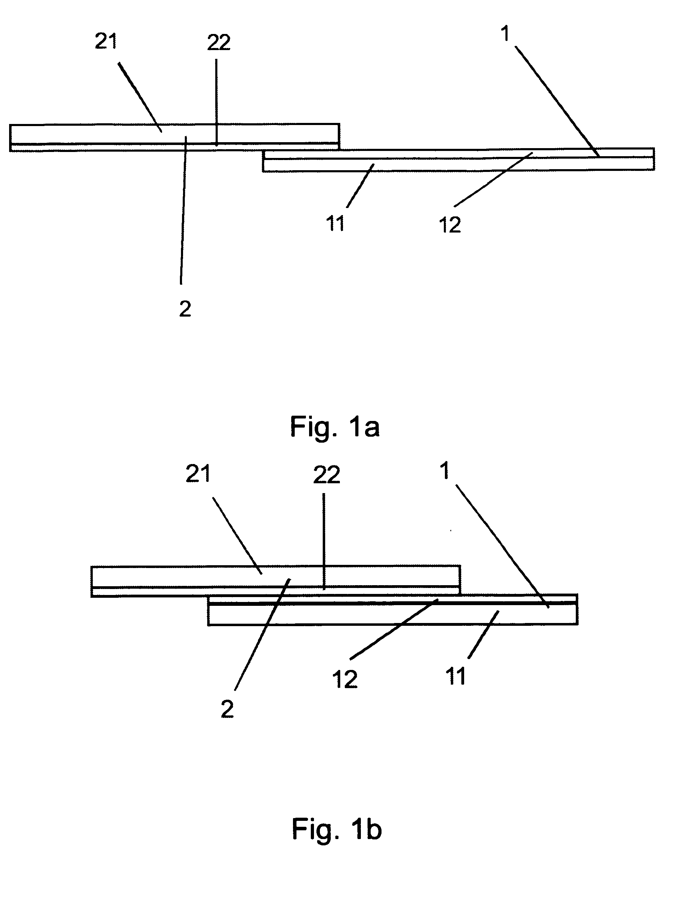

In der Figur 1a und in der Figur 1b ist jeweils eine bekannte Umhüllung dargestellt, wie sie zum Ummanteln von langgestrecktem Gut, wie insbesondere Kabelsätzen, Verwendung findet. Die Umhüllung umfasst ein erstes und ein zweites einseitig klebend ausgerüstetes Klebeband 1,2. Die Klebebänder 1, 2 bestehen jeweils aus einem Träger 11, 21, auf die jeweils eine Klebemasse 12, 22 aufgebracht ist. Die Klebebänder 1, 2 sind in Laufrichtung jeweils klebemasseseitig mit Versatz aufeinander laminiert. Der Versatz beträgt 20 % gemäß Figur 1a und 66 % gemäß Figur 1b.

In der folgenden Tabelle sind typische Maße für die Breiten der Klebebänder 1 und 2, für die Gesamtbreite der Umhüllung, die sich aus der Breite der Klebebänder 1 und 2 sowie aus dem Versatz ergibt, sowie für die Breite der Überlappung angegeben.

| Gesamtbreite der Umhüllung [mm] | Breite der Klebebänder [mm] | Breite der Überlappung [mm] |
|---|---|---|
| 67 | 38 | 19 |
| 85 | 50 | 25 |
| 100 | 60 | 30 |
| 115 | 75 | 45 |
| 130 | 90 | 60 |
| 145 | 105 | 75 |

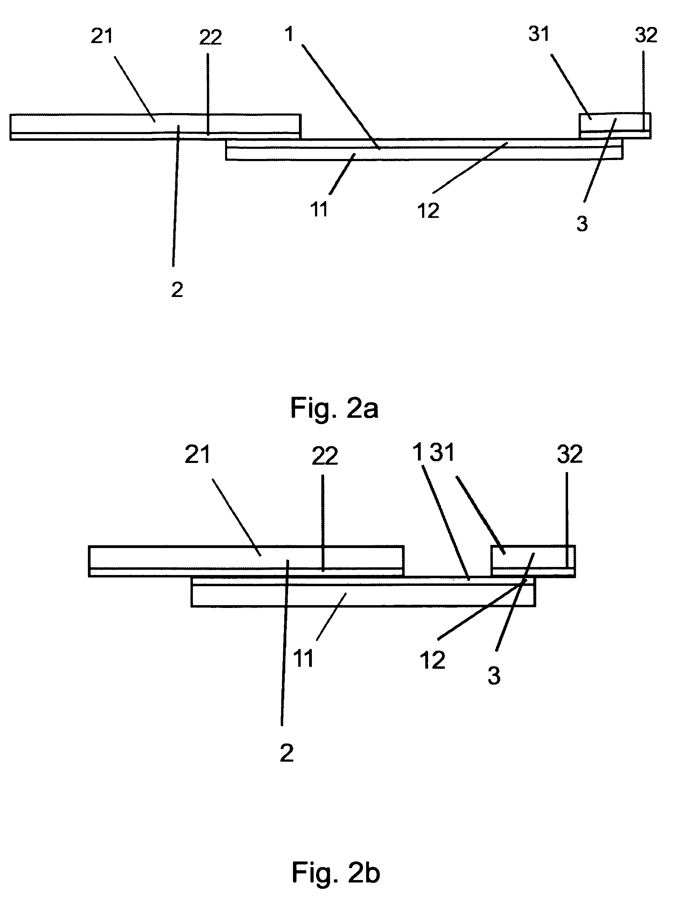

Die Figur 2a und die Figur 2b zeigen jeweils die erfindungsgemäße Umhüllung aus zwei aufeinander laminierten Klebebändern 1, 2 sowie einem dritten einseitig klebend ausgerüsteten Klebeband 3. An der freien Kante des ersten Klebebands 1 der Umhüllung ist das dritte einseitig klebend ausgerüstete Klebeband 3, wiederum bestehend aus einem Träger 31 sowie einer Klebemasse 32, auf das erste Klebeband 1 in Laufrichtung jeweils klebemasseseitig mit Versatz auflaminiert, wobei das dritte Klebeband 3 eine kleinere Breite aufweist als das erste. Der Versatz des Klebebands 3 beträgt jeweils 50 %.
Der Versatz zwischen Klebeband 1 und Klebeband 2 beträgt 20 % gemäß Figur 2a und 66 % gemäß Figur 2b.

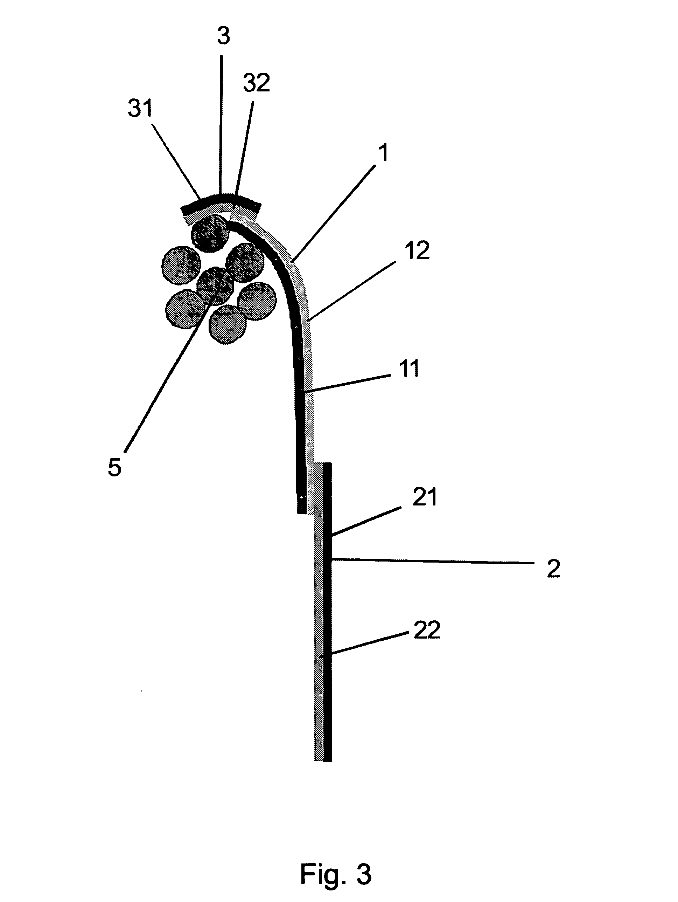

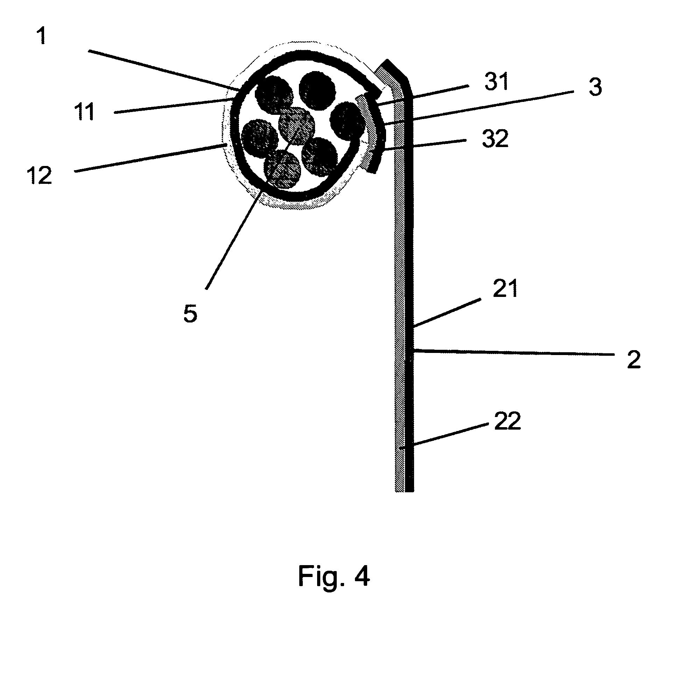

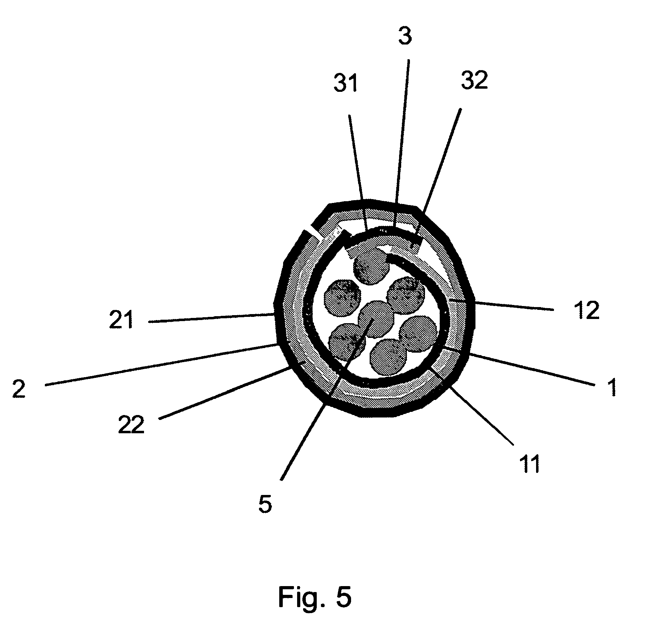

Die Figuren 3 bis 5 zeigen das erfindungsgemäße Verfahren zum Ummanteln eines Kabelbaums 5 unter Verwendung einer Umhüllung, wie sie Figur 2 darstellt.

Das Klebeband 3 wird im ersten Schritt des Verfahrens in Längsrichtung des Kabelbaums 5 fixiert. Im nächsten Schritt erfolgt die erste Lage der Ummantelung, indem das erste Klebeband 1 um den Kabelbaum 5 gewickelt wird, und zwar derart, dass die nichtklebrige Seite des Klebebands 1 am Kabelbaum 5 anliegt. Dies erhält die Flexibilität des Kabelbaums 5. Das erste Klebeband 1 der Umhüllung umschlägt das Gut 5 vollständig. Das zweite Klebeband 2 der Umhüllung wird in einer weiteren Wicklung um das Gut 5 geführt, wobei die offene Klebemasse 22 des zweiten Klebebands 2 auf der offenen Klebemasse 11 des ersten Klebebands 1 verklebt. Der Kabelbaum 5 ist abschließend von zumindest zwei Lagen Klebeband umgeben.
Die zweite Umwicklung sichert die Verklebung und stellt die Doppelschicht für einen erhöhten Abriebschutz sicher.

In der folgenden Tabelle sind typische Maße für die Breiten der Klebebänder 1 bis 3, für die Gesamtbreite der Umhüllung, die sich aus der Breite der Klebebänder 1 bis 3 sowie aus dem Versatz ergibt, sowie für den maximalen Durchmesser des mit der jeweiligen Umhüllung zu umhüllenden Kabelsatzes angegeben.

| Gesamtbreite der Umhüllung | Breite des Klebebands 3 | Breite der Klebebänder 1 und 2 | Maximaler Durchmesser des Kabelsatzes 5 |
|---|---|---|---|
| 60 | 25 | 30 | 10 |
| 80 | 25 | 40 | 13 |
| 100 | 25 | 50 | 16 |
| 120 | 25 | 60 | 19 |
| 140 | 25 | 70 | 22 |
| 160 | 25 | 80 | 25 |
| 180 | 25 | 90 | 29 |
| 200 | 25 | 100 | 32 |
| 220 | 25 | 110 | 35 |
| 240 | 25 | 120 | 38 |
| 260 | 25 | 130 | 41 |
| 280 | 25 | 140 | 45 |
| 300 | 25 | 150 | 48 |

## Patentansprüche

1. Umhüllung zum Ummanteln von langgestrecktem Gut (5), wie insbesondere Kabelsätzen, aus zwei Klebebändern, wobei auf die Umhüllung ein drittes Klebeband aufgebracht ist und wobei die Umhüllung ein erstes (1) und ein zweites (2) einseitig klebend ausgerüstetes Klebeband aufweist, die in Laufrichtung jeweils klebemasseseitig mit Versatz aufeinander laminiert sind, und an der freien Kante des ersten Klebebands (1) der Umhüllung ein drittes einseitig klebend ausgerüstetes Klebeband (3) auf das erste Klebeband (1) in Laufrichtung jeweils klebemasseseitig mit Versatz auflaminiert ist, wobei das dritte Klebeband (3) auf der gleichen Seite des ersten Klebebands (1) angeordnet ist wie das zweite Klebeband (2).

2. Umhüllung nach Anspruch 1, **dadurch gekennzeichnet, dass** die Umhüllung in festen Längen, zum Beispiel als Meterware, oder als Endlosware auf Rollen vorliegt.

3. Umhüllung auf nach Anspruch 1 oder 2, **dadurch gekennzeichnet, dass** die Umhüllung eine Breite aufweist von 50 bis 400 mm, insbesondere von 50 bis 250 mm.

4. Umhüllung nach zumindest einem der vorherigen Ansprüche, **dadurch gekennzeichnet, dass** das erste Klebeband (1) eine Breite aufweist von 30 bis 140 mm, das zweite Klebeband (2) eine Breite aufweist von 30 bis 140 mm und/oder das dritte Klebeband (3) eine Breite aufweist von 10 bis 35 mm, vorzugsweise 15 bis 20 mm.

5. Umhüllung nach zumindest einem der vorherigen Ansprüche, **dadurch gekennzeichnet, dass** das erste Klebeband (1) und das zweite Klebeband (2) die gleiche Breite aufweisen.

6. Umhüllung nach zumindest einem der vorherigen Ansprüche, **dadurch gekennzeichnet, dass** das erste Klebeband (1) mit einem Versatz von 20 bis 50 % bezogen auf die Breite des Klebebands (1) auf das zweite Klebeband (2) laminiert ist.

7. Umhüllung nach zumindest einem der vorherigen Ansprüche, **dadurch gekennzeichnet, dass** das erste Klebeband (1) und das zweite Klebeband (2) die gleiche Breite aufweisen, wobei das Verhältnis Breite der Klebebänder (1, 2) B zu Breite des Versatzes VS zwischen 2:1 und 1,4:1 liegt, wobei weiter vorzugsweise der Grad der Überlappung mit zunehmender Breite der Klebebänder (1, 2) zunimmt.

8. Umhüllung nach zumindest einem der vorherigen Ansprüche, **dadurch gekennzeichnet, dass** das dritte Klebeband (3) mit einem Versatz von 40 bis 60 %, insbesondere 50 % bezogen auf die Breite des Klebebands (3) auf das erste Klebeband (1) laminiert ist.

9. Umhüllung nach zumindest einem der vorherigen Ansprüche, **dadurch gekennzeichnet, dass** das Trägermaterial (11, 21, 31) des ersten (1), des zweiten (2) und/oder des dritten (3) Klebebandes aus einer Schlingenware oder einem Velour, Gelege, Gewebe oder Gewirke, insbesondere einem PET-Filamentgewebe oder einem Polyamid-Gewebe besteht.

10. Umhüllung nach zumindest einem der vorherigen Ansprüche, **dadurch gekennzeichnet, dass** die Klebemasse (112, 22, 32) des ersten (1), des zweiten (2) und/oder des dritten (3) Klebebands eine Selbstklebemasse ist, wobei die Selbstklebemasse eine Kautschuk- oder Acrylat- oder Silikonklebemasse sein kann.

11. Verfahren zum Ummanteln von langgestrecktem Gut (5), wie insbesondere Kabelsätzen, mit einer Umhüllung, die ein erstes (1) und ein zweites (2) einseitig klebend ausgerüstetes Klebeband aufweist, die in Laufrichtung jeweils klebemasseseitig mit Versatz aufeinander laminiert sind, und an der freien Kante des ersten Klebebands (1) der Umhüllung ein drittes einseitig klebend ausgerüstetes Klebeband (3) auf das erste Klebeband (1) in Laufrichtung jeweils klebemasseseitig mit Versatz auflaminiert ist, wobei das dritte Klebeband (3) auf der gleichen Seite des ersten Klebebands (1) angeordnet ist wie das zweite Klebeband (2), wobei
das dritte Klebeband (3) parallel zur Mittelachse des langgestreckten Guts (5) ausgerichtet wird und auf dem langgestreckten Gut fixiert wird,
die freie Kante des ersten Klebebands (1) der Umhüllung parallel zur Mittelachse des langgestreckten Guts (5) derart ausgerichtet wird, dass bezogen auf die Mittelachse des Gutes (5) die Klebemasse (12) des ersten Klebebands (1) außenwärts liegt,
das erste Klebeband (1) der Umhüllung mit der freien Kante an das Gut (5) geführt wird,
das erste Klebeband (1) der Umhüllung um das Gut (5) gewickelt wird, so dass das erste Klebeband (1) der Umhüllung das Gut (5) im wesentlichen vollständig umschlägt,
das zweite Klebeband (2) der Umhüllung in einer weiteren Wicklung um das Gut (5) geführt wird, wobei die offene Klebemasse (22) des zweiten Klebebands (2) auf der offenen Klebemasse (12) des ersten Klebebands (1) verklebt,
so dass das Gut (5) stets von zumindest zwei Lagen Klebeband (1, 2) umgeben ist.

12. Verfahren nach Anspruch 11, **dadurch gekennzeichnet, dass** die Wicklung des zweiten Klebebands (2) der Umhüllung derart erfolgt, dass die offene Klebemasse (12) des ersten Klebebands (1) vollständig vom zweiten Klebeband (2) abgedeckt ist.

13. Ummanteltes langgestrecktes Gut, wie insbesondere ein Kabelsatz, erhalten nach zumindest einem der Ansprüche 11 oder 12.

14. Fahrzeug, enthaltend ummanteltes langgestrecktes Gut (5) nach Anspruch 11.

## Claims

1. Serving for covering an elongated product (5), such as in particular cable looms, comprising two adhesive tapes, a third adhesive tape being applied to the serving and the serving having a first single-sided adhesive tape (1) and a second single-sided adhesive tape (2), which are laminated on each other, respectively on the side with the adhesive compound, in the longitudinal direction and with an offset, and at the free edge of the first adhesive tape (1) of the serving a third single-sided adhesive tape (3) being laminated onto the first adhesive tape (1), respectively on the side with the adhesive compound, in the longitudinal direction and with an offset, the third adhesive tape (3) being arranged on the same side of the first adhesive tape (1) as the second adhesive tape (2).

2. Serving according to Claim 1, **characterized in that** the serving takes the form of fixed lengths, for example as metre stock, or as continuous stock on reels.

3. Serving according to Claim 1 or 2, **characterized in that** the serving has a width of 50 to 400 mm, in particular of 50 to 250 mm.

4. Serving according to at least one of the preceding claims, **characterized in that** the first adhesive tape (1) has a width of 30 to 140 mm, the second adhesive tape (2) has a width of 30 to 140 mm and/or the third adhesive tape (3) has a width of 10 to 35 mm, preferably 15 to 20 mm.

5. Serving according to at least one of the preceding claims, **characterized in that** the first adhesive tape (1) and the second adhesive tape (2) have the same width.

6. Serving according to at least one of the preceding claims, **characterized in that** the first adhesive tape (1) is laminated on the second adhesive tape (2) with an offset of 20 to 50% with respect to the width of the adhesive tape (1).

7. Serving according to at least one of the preceding claims, **characterized in that** the first adhesive tape (1) and the second adhesive tape (2) have the same width, the ratio of the width of the adhesive tapes (1, 2) B to the width of the offset VS lying between 2:1 and 1.4:1, the degree of overlap also preferably increasing with increasing width of the adhesive tapes (1, 2).

8. Serving according to at least one of the preceding claims, **characterized in that** the third adhesive tape (3) is laminated on the first adhesive tape (1) with an offset of 40 to 60%, in particular 50%, with respect to the width of the adhesive tape (3).

9. Serving according to at least one of the preceding claims, **characterized in that** the backing material (11, 21, 31) of the first (1), the second (2) and/or the third (3) adhesive tape consists of a loop fabric or a velour, a scrim, a woven fabric or a knitted fabric, in particular a woven PET filament fabric or a woven polyamide fabric.

10. Serving according to at least one of the preceding claims, **characterized in that** the adhesive compound (12, 22, 32) of the first (1), the second (2) and/or the third (3) adhesive tape is a self-adhesive compound, it being possible for the self-adhesive compound to be a rubber or acrylic or silicone adhesive compound.

11. Method for covering an elongated product (5), such as in particular cable looms, with a serving, which has a first single-sided adhesive tape (1) and a second single-sided adhesive tape (2), which are laminated on each other, respectively on the side with the adhesive compound, in the longitudinal direction and with an offset, and at the free edge of the first adhesive tape (1) of the serving a third single-sided adhesive tape (3) being laminated onto the first adhesive tape (1), respectively on the side with the adhesive compound, in the longitudinal direction and with an offset, the third adhesive tape (3) being arranged on the same side of the first adhesive tape (1) as the second adhesive tape (2), wherein
the third adhesive tape (3) is aligned parallel to the centre axis of the elongated product (5) and fixed on the elongated product,
the free edge of the first adhesive tape (1) of the serving is aligned parallel to the centre axis of the elongated product (5) in such a way that the adhesive compound (12) of the first adhesive tape (1) lies outwards with respect to the centre axis of the product (5),
the first adhesive tape (1) of the serving is brought with the free edge up to the product (5),
the first adhesive tape (1) of the serving is wound around the product (5), so that the first adhesive tape (1) of the serving wraps around the product (5) substantially completely, and
the second adhesive tape (2) of the serving is wound further around the product (5), the open adhesive compound (22) of the second adhesive tape (2) adhesively bonding on the open adhesive compound (12) of the first adhesive tape (1),
so that the product (5) is always surrounded by at least two layers of adhesive tape (1, 2).

12. Method according to Claim 11, **characterized in that** the winding of the second adhesive tape (2) of the serving is performed in such a way that the open adhesive compound (12) of the first adhesive tape (1) is completely covered by the second adhesive tape (2).

13. Covered elongated product, such as in particular a cable loom, obtained by at least one of Claims 11 and 12.

14. Vehicle comprising a covered elongated product (5) according to Claim 13.

## Revendications

1. Gaine pour entourer un produit oblong (5), en particulier des faisceaux de câbles, composée de deux bandes adhésives, dans laquelle une troisième bande adhésive est appliquée sur la gaine et dans laquelle la gaine présente une première (1) et une deuxième (2) bande adhésive rendues adhésives sur une seule face, qui sont plaquées l'une sur l'autre, chaque fois du côté de la masse adhésive, avec un décalage dans la direction de défilement et une troisième bande adhésive (3) rendue adhésive sur un seul côté est plaquée sur la première bande adhésive (1), sur le bord libre de la première bande adhésive (1) de la gaine, chaque fois du côté de la masse adhésive, avec un décalage dans la direction de défilement, dans laquelle la troisième bande adhésive (3) est disposée sur la même face de la première bande adhésive (1) que la deuxième bande adhésive (2).

2. Gaine selon la revendication 1, **caractérisée en ce que** la gaine se présente en longueurs fixes, par exemple comme produit au mètre, ou comme produit sans fin en rouleaux.

3. Gaine selon la revendication 1 ou 2, **caractérisée en ce que** la gaine présente une largeur de 50 à 400 mm, en particulier de 50 à 250 mm.

4. Gaine selon au moins une des revendications précédentes, **caractérisée en ce que** la première bande adhésive (1) présente une largeur de 30 à 140 mm, la deuxième bande adhésive (2) présente une largeur de 30 à 140 mm et/ou la troisième bande adhésive (3) présente une largeur de 10 à 35 mm, de préférence de 15 à 20 mm.

5. Gaine selon au moins une des revendications précédentes, **caractérisée en ce que** la première bande adhésive (1) et la deuxième bande adhésive (2) présentent la même largeur.

6. Gaine selon au moins une des revendications précédentes, **caractérisée en ce que** la première bande adhésive (1) est plaquée sur la deuxième bande adhésive (2) avec un décalage de 20 à 50 % par rapport à la largeur de la bande adhésive (1).

7. Gaine selon au moins une des revendications précédentes, **caractérisée en ce que** la première bande adhésive (1) et la deuxième bande adhésive (2) présentent la même largeur, dans laquelle le rapport entre la largeur B des bandes adhésives (1, 2) et la largeur du décalage VS se situe entre 2:1 1 et 1,4:1, dans laquelle en outre le taux de recouvrement augmente lorsque la largeur des bandes adhésives (1, 2) augmente.

8. Gaine selon au moins une des revendications précédentes, **caractérisée en ce que** la troisième bande adhésive (3) est plaquée sur la première bande adhésive (1) avec un décalage de 40 à 60 %, en particulier de 50 %, par rapport à la largeur de la bande adhésive (3).

9. Gaine selon au moins une des revendications précédentes, **caractérisée en ce que** le matériau de support (11, 21, 31) de la première (1), de la deuxième (2) et/ou de la troisième (3) bande adhésive se compose d'un produit bouclé ou d'un velours, d'un non-tissé, d'un tissu ou d'un tricot, en particulier d'un tissu de filaments PET ou d'un tissu de polyamide.

10. Gaine selon au moins une des revendications précédentes, **caractérisée en ce que** la masse adhésive (12, 22, 32) de la première (1), de la deuxième (2) et/ou de la troisième (3) bande adhésive est une masse autoadhésive, dans laquelle la masse autoadhésive peut être une masse adhésive de caoutchouc ou d'acrylate ou de silicone.

11. Procédé pour entourer un produit oblong (5), en particulier des faisceaux de câbles, avec une gaine, qui présente une première (1) et une deuxième (2) bande adhésive rendues adhésives sur une seule face, qui sont plaquées l'une sur l'autre, chaque fois du côté de la masse adhésive, avec un décalage dans la direction de défilement, et une troisième bande adhésive (3) rendue adhésive sur une seule face est plaquée sur la première bande adhésive (1), sur le bord libre de la première bande adhésive (1), chaque fois du côté de la masse adhésive, avec un décalage dans la direction de défilement, dans lequel la troisième bande adhésive (3) est disposée sur la même face de la première bande adhésive (1) que la deuxième bande adhésive (2), dans lequel
la troisième bande adhésive (3) est orientée parallèlement à l'axe central du produit oblong (5) et est fixée sur le produit oblong,
le bord libre de la première bande adhésive (1) de la gaine est orienté parallèlement à l'axe central du produit oblong (5) de telle manière que, par rapport à l'axe central du produit (5), la masse adhésive (12) de la première bande adhésive (1) soit située vers l'extérieur,
la première bande adhésive (1) de la gaine est guidée sur le produit (5) avec le bord libre,
la première bande adhésive (1) de la gaine est enroulée autour du produit (5), de telle manière que la première bande adhésive (1) de la gaine enveloppe essentiellement entièrement le produit (5),
la deuxième bande adhésive (2) de la gaine est conduite en un deuxième enroulement autour du produit (5), dans lequel la masse adhésive ouverte (22) de la deuxième bande adhésive (2) se colle sur la masse adhésive ouverte (12) de la première bande adhésive (1),
de telle manière que le produit (5) soit toujours entouré par au moins deux couches de bande adhésive (1, 2) .

12. Procédé selon la revendication 11, **caractérisé en ce que** l'enroulement de la deuxième bande adhésive (2) de la gaine est effectué de telle manière que la masse adhésive ouverte (12) de la première bande adhésive (1) soit recouverte entièrement par la deuxième bande adhésive (2).

13. Produit oblong gainé, en particulier faisceau de câbles, obtenu selon au moins une des revendications 11 ou 12.

14. Véhicule, contenant un produit oblong gainé (5) selon la revendication 13.
